# FASCICULE DE BREVET EUROPEEN

(11) **EP 2 656 190 B1**
(45) Date de publication et mention de la délivrance du brevet: **04.11.2020**
(21) Numéro de dépôt: 11804573.1
(22) Date de dépôt: 22.12.2011
(51) Int. Cl.: G06F 3/0484, G06F 3/0354, E06B 9/32

(54) **DISPOSITIF ET PROCEDE DE COMMANDE D'UN ECRAN MOBILE A LAMES ORIENTABLES MOTORISE**
VORRICHTUNG SOWIE VERFAHREN ZUR STEUERUNG EINER MOTORISCH ANGETRIEBENEN MOBILEN BLENDE MIT VERSTELLBAREN LAMELLEN
DEVICE AND METHOD FOR CONTROLLING A MOTOR-DRIVEN MOBILE SCREEN HAVING ADJUSTABLE SLATS

(30) Priorité: 22.12.2010 FR 1061014
(43) Date de publication de la demande: 30.10.2013
(73) Titulaire: SOMFY ACTIVITES SA, 74300 Cluses (FR)
(72) Inventeur: ROUX, Morgan, F-74190 Passy (FR)
(74) Mandataire: Bugnion Genève
(86) Numéro de dépôt international: PCT/EP2011/073812
(87) Numéro de publication internationale: WO 2012/085216

(56) Documents cités:
- EP-A1- 1 748 145
- EP-A1- 2 196 878
- US-A1- 2006 259 183

## Description

L'invention concerne le domaine des actionneurs électromécaniques permettant le pilotage motorisé des éléments d'occultation ou de protection solaires placés au niveau d'ouvertures dans un bâtiment. En particulier, elle concerne un dispositif de commande d'un actionneur électromécanique pilotant un écran mobile comprenant des lames orientables, tel qu'un volet roulant à lames orientables, un store vénitien d'intérieur ou d'extérieur, ou des panneaux orientables.

On connaît de la demande EP1486640 une télécommande comprenant une interface de commande d'un écran mobile à lames orientables, l'interface de commande comprenant des boutons pour la commande des déplacements en ouverture et fermeture de l'écran, et une interface séparée pour la commande de l'orientation des lames. L'interface séparée se présente principalement sous la forme d'une molette, permettant d'ajuster intuitivement et finement par une rotation d'un ou plusieurs crans de la molette, l'orientation souhaitée des lames.

On connaît également de la demande EP1748145, un agencement spécifique de l'interface de commande décrite ci-dessus. La molette destinée à la commande d'orientation se situe dans un axe central, tandis que les boutons de commande servant à la translation des lames (ouverture et fermeture de l'écran) sont situés de part et d'autre de la molette. Ainsi, les deux interfaces de commande sont bien distinctes et l'agencement évite l'actionnement par mégarde d'un des boutons de commande de translation lors d'une commande d'orientation par action sur la molette ou inversement.

On connaît par ailleurs dans le même domaine de la domotique, des interfaces de commande de divers équipements de la maison à partir d'un écran tactile. En particulier, la demande EP2196878 décrit une interface de commande de type écran, une partie de l'écran étant affectée à l'affichage d'une représentation graphique symbolisant cet équipement, et éventuellement de moyens d'ajustement de l'équipement. En agissant soit directement sur la représentation graphique de l'équipement, soit sur les moyens d'ajustement, la représentation graphique de l'équipement est modifiée pour représenter, au moins approximativement, le degré souhaité d'orientation et/ou de déploiement du produit mobile. Une commande correspondant à ce niveau d'orientation ou de déploiement peut alors être émise.
Cette interface est avantageusement utilisable avec un écran tactile. En dehors de cette configuration, il est nécessaire de prévoir de nouveaux boutons de commande qui ne correspondront pas nécessairement à la simplification de l'ergonomie de commande souhaitée.

L'invention se propose donc de résoudre les problèmes cités liés à l'art antérieur et d'offrir une interface de commande qui soit à la fois intuitive et simple. Selon l'invention, le procédé de commande d'un écran mobile à lames orientables motorisé à l'aide d'un actionneur électromécanique dans un bâtiment, la commande étant mise en œuvre à partir d'une interface de commande comprenant au moins un bouton de commande de déploiement et un élément d'aide au défilement pour l'orientation des lames, comprend :
a. une étape de détection d'une action mécanique sur un bouton principal, un bouton secondaire ou un élément d'aide au défilement d'un outil de pointage associé à un ordinateur,
b. une étape d'interprétation de l'action détectée en une commande de déploiement ou une commande d'orientation des lames.

Selon l'invention, le procédé de commande peut comprendre une étape préalable d'activation d'un élément logiciel au niveau d'un ordinateur en lien avec l'outil de pointage,

Selon l'invention, l'étape d'activation de l'élément logiciel peut comprendre l'activation d'un élément graphique de commande.

Selon l'invention, l'activation de l'élément graphique de commande peut comprendre le positionnement d'un pointeur de l'élément de pointage au niveau de l'élément graphique de commande.

Selon l'invention, le procédé peut comprendre une étape d'affichage sur un écran de l'ordinateur, d'une représentation graphique au moins partielle d'une télécommande avec molette.

Selon l'invention, le procédé de commande peut comprendre une étape d'affichage sur un écran de l'ordinateur, d'une ou plusieurs icônes représentant un équipement domotique à piloter, positionnées sur un plan du bâtiment.

Selon l'invention, une double activation (double clic) d'un des boutons de l'outil de pointage peut provoquer l'émission d'une commande de déploiement vers une position intermédiaire prédéfinie.

Selon l'invention, le procédé peut comprendre une étape préalable d'appairage entre l'actionneur et un dispositif de transmission d'ordres de commande en lien avec l'ordinateur.

Selon l'invention, le dispositif d'ordres de commande peut être un transmetteur connecté à l'ordinateur.

Selon l'invention, le dispositif de transmission d'ordres de commande peut être un boîtier de transmission en lien Internet avec l'ordinateur.

Selon l'invention, l'interface de commande pour la commande d'un écran mobile à lames orientables motorisé à l'aide d'un actionneur électromécanique, cette interface de commande comprenant un écran et une représentation graphique d'un élément logiciel sur cet écran, comprend un outil de pointage d'ordinateur comprenant un bouton principal, un bouton secondaire et un élément d'aide au défilement, ainsi que des moyens logiciels de mise en œuvre du procédé tel que décrit ci-dessus pour établir un lien fonctionnel entre les boutons principal et secondaire de l'outil de pointage et une commande de déploiement et un lien fonctionnel entre l'outil d'aide au défilement et une commande d'orientation.

Selon l'invention, l'interface de commande peut comprendre un transmetteur d'ordre sans fil apte à communiquer avec l'actionneur.

Selon l'invention, l'utilisation d'un outil de pointage lié à un ordinateur personnel, comprenant un bouton principal, un bouton secondaire et un élément d'aide au défilement, pour la commande d'un écran mobile à lames orientables motorisé à l'aide d'un actionneur électromécanique, est telle qu'une action mécanique sur l'un des boutons ou sur l'élément d'aide au défilement provoque respectivement une commande de déploiement ou une commande d'orientation des lames.

Selon l'invention, l'utilisation d'un outil de pointage lié à un ordinateur personnel, comprenant un bouton principal, un bouton secondaire et un élément d'aide au défilement, pour la commande d'un dispositif d'éclairage à intensité lumineuse réglable, est telle qu'une action mécanique sur l'un des boutons, respectivement sur l'élément d'aide au défilement, provoque une commande d'allumage ou d'extinction du dispositif d'éclairage, respectivement une commande de variation d'intensité lumineuse.

L'invention sera mieux comprise par l'homme du métier grâce à la description détaillée d'un mode d'exécution en relation avec les dessins accompagnants, dans lesquels :
- la figure 1 illustre un dispositif d'écran motorisé selon l'art antérieur,
- la figure 2 illustre un dispositif d'écran motorisé selon l'invention,
- la figure 3 illustre de manière schématique un procédé de commande selon l'invention,
- la figure 4 illustre une architecture du système de communication se prêtant à la mise en œuvre de l'invention,
- la figure 5 illustre une page d'interface présentée sur un écran d'ordinateur pour la mise en œuvre du procédé de commande selon l'invention.

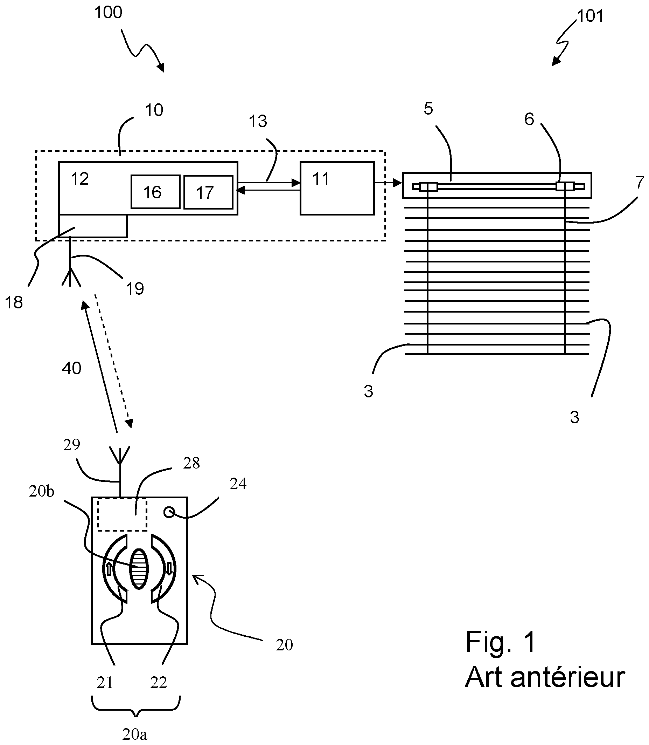

La figure 1 montre de manière schématique un dispositif 100 d'écran motorisé selon l'art antérieur. Le dispositif d'écran motorisé à lames orientables, par exemple un store vénitien, comprend un ensemble de lames 3 mobiles en translation et en rotation. Ces lames sont maintenues et pilotées par un système de cordons de levage et d'orientations, ces cordons étant en liaison avec un arbre et des tambours d'enroulement dans un caisson 5. L'écran est piloté en mouvement par un actionneur électromécanique 10, notamment un actionneur électromécanique, disposé dans le caisson (et représenté pour la lisibilité de la figure en dehors de celui-ci). L'actionneur comprend une partie électromécanique 11 (moteur, réducteur, frein), reliée à une unité électronique de commande 12. L'unité de commande pilote les opérations de la partie électromécanique de l'actionneur par un transfert d'information (sous forme de communication électrique principalement) symbolisé par une double flèche 13.

L'actionneur peut comprendre divers capteurs, comme par exemple un capteur de couple 16, un capteur de position 17.

Il comprend également un récepteur d'ordres 18 (dans le cas d'un actionneur à communication bidirectionnelle, le récepteur d'ordres est donc un émetteur-récepteur) muni d'une antenne 19 et des moyens matériels et/ou logiciels permettant de régir son fonctionnement conformément au procédé objet de l'invention.

Le dispositif est associé à un point de commande 20 relié par un réseau de communication 40 filaire ou sans fil. Le point de commande comprend par exemple un premier ensemble 20a de deux touches 21 et 22, permettant la transmission d'un ordre de commande d'ouverture ou de fermeture de l'écran. Le point de commande comprend à cet effet un émetteur d'ordres 28 muni d'une antenne 29, l'émetteur d'ordres étant apte à communiquer avec le récepteur d'ordres de l'actionneur.

Lorsque cet ordre est reçu par le récepteur de l'actionneur, il est traduit en une action mécanique réalisant l'ouverture ou la fermeture de l'écran par empilement des lames au niveau d'une position haute proche du caisson ou par déploiement des lames vers une position basse.

Un élément central 20b, par exemple sous forme d'une molette, permet de commander une orientation des lames dans un premier sens ou dans un deuxième sens. Une diode lumineuse 24 (ou tout autre interface graphique, par exemple un écran) permet une visualisation d'information au niveau du point de commande.

Les ordres transmis par le point de commande, soit directement au récepteur d'ordre, soit par l'intermédiaire d'un boîtier de commande non représenté, comprennent une indication de type d'ordre (ouverture, fermeture, orientation sens 1 ou sens 2, positionnement intermédiaire, etc.) qui qualifie le mouvement mécanique à donner au store.

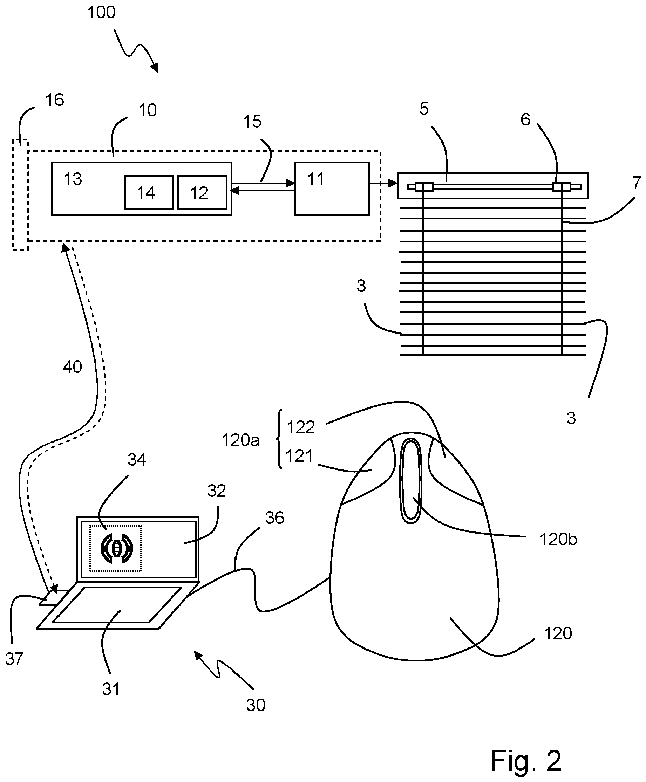

Le dispositif selon l'invention est représenté de manière schématique à la figure 2. Sur celle-ci, les différents éléments composant le dispositif d'écran motorisé, par exemple l'actionneur et le store sont identiques et portent les mêmes références.
L'invention porte particulièrement sur une interface de commande qui peut être substituée ou utilisée de manière complémentaire au point de commande décrit précédemment.

Un ordinateur 30, représenté sur la figure 2 sous forme d'un ordinateur personnel portable comprend un clavier 31 et un écran 32, sur lequel est représentée une zone d'affichage 34. L'ordinateur est connecté à un outil de pointage de type souris, par l'intermédiaire d'une liaison filaire 36 ou sans fil. La souris comprend des boutons de commande 120a comprenant un premier bouton principal 121 (ou bouton de clic gauche) et un second bouton secondaire 122 (ou bouton de clic droit). La souris comprend également une molette 120b pouvant être actionnée dans un premier sens et dans un deuxième sens de rotation. A l'outil de pointage correspond à l'écran un curseur 130, dont les déplacements relatifs à l'écran correspondent à des déplacements de la souris. Une activation d'un des boutons de sélection permet de sélectionner un objet pointé à l'écran par le curseur ou d'obtenir l'apparition d'un menu liste comprenant un choix d'actions à réaliser.

Alternativement, l'outil de pointage peut être une unité intégrée au clavier, comprenant par exemple deux boutons mécaniques correspondant aux boutons primaire et secondaire de la souris ainsi qu'un élément tactile. L'élément tactile correspond dans ce cas à la molette de la souris. L'élément tactile comprend une zone de contact telle qu'un mouvement sur cette zone provoque un déplacement du curseur. L'élément tactile peut être un pavé tactile ou un « track point ». Dans ces différents cas, une action sur l'outil de pointage permet un déplacement du curseur représenté au niveau de l'écran et/ou un défilement des éléments contenus dans une fenêtre d'affichage à l'écran. Par la suite et pour simplifier, la molette de souris et l'élément tactile intégré au clavier sont notés élément d'aide au défilement de l'outil de pointage. L'élément d'aide au défilement a pour objet de faire défiler le contenu d'un affichage dans une fenêtre à l'écran d'un ordinateur.

L'ordinateur comprend des moyens matériels et logiciels (non représentés) pour notamment gérer l'affichage d'une fenêtre d'activation, pour dialoguer avec un serveur local ou distant et pour détecter les mouvements et actionnements de l'outil de pointage associé à l'ordinateur, et en particulier pour détecter les actions sur l'élément d'aide au défilement de l'outil de pointage.

L'utilisation de l'outil de pointage en association avec une zone d'affichage à l'écran permet la commande d'équipements domotiques distincts, ainsi qu'il serait possible en utilisant le point de commande à molette décrit ci-dessus. L'outil de pointage perd alors une partie de ses fonctionnalités liées au fonctionnement de l'ordinateur en tant qu'outil bureautique pour gagner des nouvelles fonctionnalités de commande d'équipement domotique. Ces modifications de fonctionnalités sont temporaires.

Dans un premier mode de réalisation, le changement de fonctionnalité a lieu lorsque le curseur est positionné dans la zone d'affichage.

L'application représentée à l'écran prend par exemple la forme d'une fenêtre de commande 34 dans laquelle est représenté graphiquement un visuel lié à l'utilisation de l'outil de pointage comme point de commande. Ce visuel peut par exemple être une représentation graphique du point de commande à molette de l'installation. Alternativement, il s'agit d'une représentation graphique de l'élément à commander, de l'outil de pointage lui-même ou d'un logo associé à la technologie de communication utilisée ou au fabricant de l'actionneur.

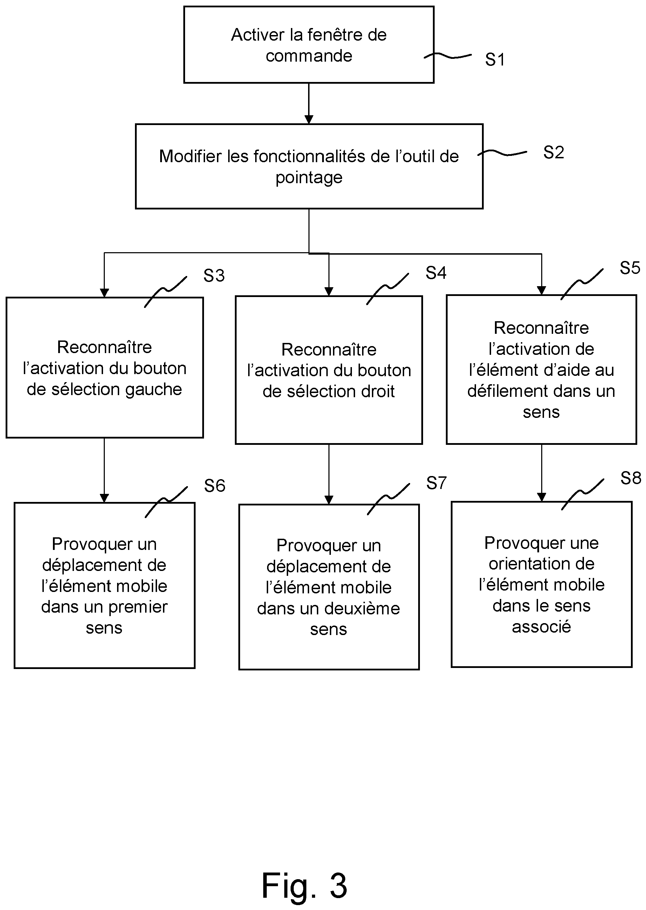

La figure 3 représente de manière schématique les différentes étapes du procédé selon l'invention. Au cours d'une étape S1, le curseur à l'écran associé à l'outil de pointage peut être positionné dans le cadre de la fenêtre de commande. Le positionnement du curseur est réalisé par une action sur l'outil de pointage : son déplacement complet relativement à une surface fixe ou une action sur l'outil d'aide au défilement. Les moyens logiciels de l'ordinateur étant capables de repérer le positionnement du curseur à l'écran, sont capables de déterminer que le curseur est positionné en un point de la fenêtre de commande. Au cours d'une étape S2, les fonctionnalités de l'outil de pointage sont modifiées. Tant que le curseur de l'outil de pointage n'est pas déplacé hors de la fenêtre de commande, une activation d'un bouton droit, déterminé au cours d'une étape S3 provoque l'émission d'une commande de déplacement dans un premier sens, par exemple une commande d'ouverture au cours d'une étape S6. Une activation du bouton gauche au cours d'une étape S4 provoque l'émission d'une commande de déplacement dans un deuxième sens, par exemple une commande de fermeture au cours d'une étape S7. Une activation de l'outil d'aide au défilement au cours d'une étape S5 provoque l'émission d'une commande d'orientation dans un sens associé, c'est-à-dire une commande de basculement des lames orientables de l'écran au cours d'une étape S8. L'outil d'aide au défilement pouvant être actionné dans un premier ou dans un deuxième sens, la commande d'orientation peut prendre deux formes : orientation dans un premier et dans un deuxième sens. La commande reçue par le dispositif d'écran est mise en œuvre à l'aide de l'actionneur.

Alternativement au déplacement du curseur sur une fenêtre, l'activation de cette fenêtre ou l'ouverture d'un programme de commande permet le changement de fonctionnalité de la souris, sans changer le procédé.

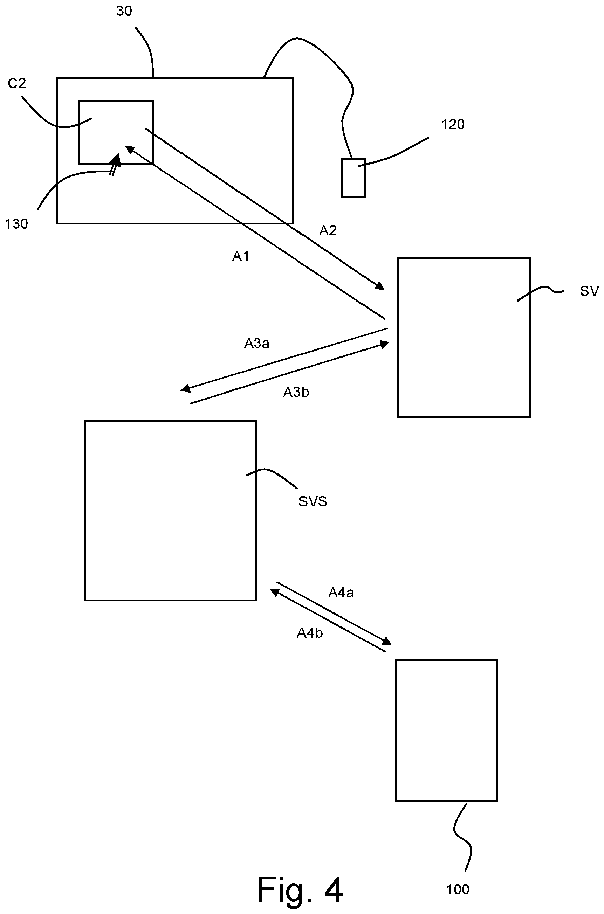

La figure 4 schématise une architecture du système de communication se prêtant à la mise en œuvre de l'invention et permet d'expliquer les relations matérielles et immatérielles entre l'ordinateur et le dispositif d'écran motorisé.

Un serveur web SV, local (compris dans les ressources matérielles de l'ordinateur) ou distant (en lien distant avec l'ordinateur) fournit une page web contenant une application logicielle (« WebApp ») affichable à l'écran de l'ordinateur ainsi que des messages d'information à destination des utilisateurs. Cette communication est représentée par la flèche A1. Cette application logicielle (en langage Javascript par exemple) permet de manière classique de repérer les mouvements et activations de l'outil de pointage au niveau de l'ordinateur et en particulier au niveau de la fenêtre de commande. Lorsque ces activations sont détectées, alors qu'un changement de fonctionnalités de l'outil de pointage est actif, l'application logicielle de la page web génère des informations à retransmettre vers le serveur. Cette communication est représentée par la flèche A2.

Les informations transitent alors par des liaisons filaires ou non de type intranet ou internet ou par des connexions logicielles en local lorsque le serveur est logé lui-même au niveau de l'ordinateur. Ce serveur retransmet l'information sous forme d'un message compréhensible à destination d'un serveur stores SVS ou boîtier de commande (comme le serveur Web, il peut être local ou distant). La communication correspondante représentée par la flèche A3a peut être doublée d'une communication inverse (A3b) comprenant par exemple des accusés de réception ou requêtes diverses d'information. Le serveur store retranscrit ensuite l'information sous forme d'ordre de commande compréhensible par le dispositif d'écran (flèche A4a). En particulier, ce serveur stores comprend les moyens matériels et logiciels pour traduire l'information sous forme d'ordre de commande, ainsi que pour assurer la transmission vers le destinataire de l'ordre. Alternativement, la gestion de la destination du message ou de la sécurité est gérée à un autre niveau dans la chaîne de transmission de l'information. Des messages d'accusé de réception des ordres peuvent être retournés par le dispositif vers le serveur stores (flèche A4b), puis éventuellement au travers des différentes liaisons décrites ci-dessus, jusqu'à la fenêtre d'affichage à l'écran où ils sont affichés de manière lisible.

Un mode de réalisation alternatif de l'invention est plus particulièrement représenté sur la figure 2. Dans ce mode de réalisation, le procédé est géré complètement en local, c'est-à-dire sans passer par un lien vers un serveur stores distant par une liaison de type Internet.
En particulier, une clé de commande 37, comprenant un émetteur d'ordres de commande est connectée à l'ordinateur, par exemple par l'intermédiaire d'une prise USB. Cette clé de commande est appairée avec un boîtier de commande des stores situé dans le bâtiment (non représenté) ou directement avec les stores de manière individuelle. Lorsqu'une activation de l'outil de pointage est détectée en coopération avec un changement de fonctionnalités de cet outil, une application logicielle locale génère directement les ordres de commande à émettre via la clé de commande. L'application logicielle locale est alors soit un programme exécuté sur l'ordinateur, soit une combinaison de page WEB avec un serveur WEB local, retransmettant les infos vers la clé. La clé fait alors office de serveur store.

Le serveur WEB et le serveur Stores peuvent être un seul et même serveur d'information. Alternativement, ceux-ci communiquent selon plusieurs technologies : Webservices, sockets, objet COM, Messages (IPC), etc. La communication entre le serveur stores et l'équipement domotique lui-même peut également utiliser diverses technologies connues (lien filaire, par exemple RS485, Infrarouge, radio unidirectionnelle ou bidirectionnelle.

La traduction des mouvements et activations de l'outil de pointage en ordres de commande peut être gérée directement au niveau de l'application locale gérant l'affichage de la page Web. Alternativement, elle peut être gérée au niveau du serveur Web ou du serveur Stores.

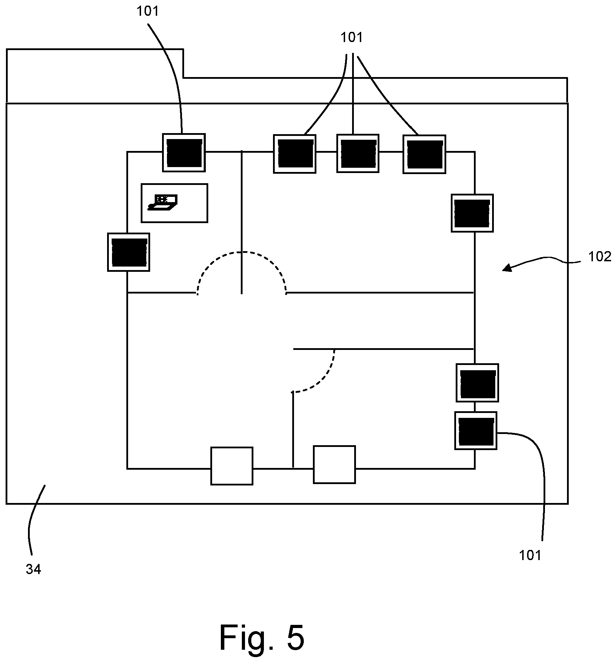

Dans la mesure où l'outil de pointage peut être utilisé pour la commande de plusieurs équipements domotiques, il est intéressant de prévoir que ceux-ci sont représentés ou symbolisés à l'écran sur la page d'interface de manière repérable, par exemple par une icône 101 ou une photographie représentative d'un dispositif, positionnée sur un plan 102 du bâtiment, comme représenté en figure 5. Le positionnement du curseur sur chaque icône (ou activation d'une icône) provoque un changement de fonctionnalité de l'outil de pointage. Lors d'une action sur l'un des boutons ou sur l'élément d'aide au défilement, une commande à l'attention du dispositif d'écran motorisé est générée en association avec un envoi d'information concernant l'identification de l'objet à commander. Ainsi, le même outil de pointage peut servir très simplement pour la commande de divers équipements domotiques.

Pour provoquer le retour de l'outil de pointage dans sa configuration initiale, il est possible soit de provoquer un mouvement de celui-ci hors d'une zone de l'écran associée à la commande d'équipement, soit d'utiliser une touche du clavier, par exemple une touche Echap.

L'invention a été décrite ci-dessus en relation avec la commande d'un store à lames orientables. Cependant, elle pourrait également de la même manière être mise en œuvre pour la commande d'un dispositif d'éclairage, l'élément d'aide au défilement contribuant alors à commander une variation d'intensité lumineuse.

## Revendications

1. Procédé de commande d'un écran domotique mobile à lames orientables motorisé à l'aide d'un actionneur électromécanique dans un bâtiment, la commande étant mise en œuvre à partir d'une interface de commande comprenant un écran et un outil de pointage auquel correspond à l'écran un curseur, une action sur l'outil de pointage permettant un déplacement du curseur à l'écran, l'outil de pointage comprenant au moins un bouton de commande de déploiement et un élément d'aide au défilement pour l'orientation des lames, l'outil de pointage étant lié à un ordinateur, le procédé comprenant :
a. Une étape (S1) d'activation d'une fenêtre de commande (34);
b. Une étape (S2) de modification des fonctionnalités de l'outil de pointage en association avec la fenêtre de commande (34), l'outil de pointage perdant alors une partie de ses fonctionnalités liées au fonctionnement de l'ordinateur en tant qu'outil bureautique pour gagner des nouvelles fonctionnalités de commande d'écran domotique ;
c. une étape de détection d'une action mécanique sur un bouton principal, un bouton secondaire ou un élément d'aide au défilement de l'outil de pointage et
d. une étape d'interprétation de l'action mécanique détectée en une commande de déploiement ou une commande d'orientation des lames, l'action mécanique sur l'un des boutons principal ou secondaire ou sur l'élément d'aide au défilement provoquant respectivement une commande de déploiement ou une commande d'orientation des lames.

2. Procédé de commande selon la revendication précédente, **caractérisé en ce que** l'étape d'activation de l'élément logiciel comprend l'activation d'un élément graphique de commande.

3. Procédé de commande selon la revendication précédente, **caractérisé en ce que** l'activation de l'élément graphique de commande comprend le positionnement d'un curseur de l'élément de pointage au niveau de l'élément graphique de commande.

4. Procédé de commande selon l'une des revendications précédentes, **caractérisé en ce qu'**il comprend une étape d'affichage sur un écran de l'ordinateur, d'une représentation graphique au moins partielle d'une télécommande avec molette.

5. Procédé de commande selon l'une des revendications précédentes, **caractérisé en ce qu'**il comprend une étape d'affichage sur un écran de l'ordinateur, d'une ou plusieurs icônes représentant un équipement domotique à piloter, positionnées sur un plan du bâtiment.

6. Procédé de commande selon l'une des revendications précédentes, **caractérisé en ce qu'**une double activation (double clic) d'un des boutons de l'outil de pointage provoque l'émission d'une commande de déploiement vers une position intermédiaire prédéfinie.

7. Procédé de commande selon l'une des revendications précédentes, **caractérisé en ce qu'**il comprend une étape préalable d'appairage entre l'actionneur et un dispositif de transmission d'ordres de commande en lien avec l'ordinateur.

8. Procédé de commande selon la revendication précédente, **caractérisé en ce que** le dispositif d'ordres de commande est un transmetteur connecté à l'ordinateur.

9. Procédé de commande selon la revendication 7, **caractérisé en ce que** le dispositif de transmission d'ordres de commande est un boîtier de transmission en lien Internet avec l'ordinateur.

10. Interface de commande pour la commande d'un écran mobile à lames orientables motorisé à l'aide d'un actionneur électromécanique (10), cette interface de commande comprenant un écran (32) et une représentation graphique d'un élément logiciel sur cet écran (34), **caractérisée en ce que** l'interface comprend un outil de pointage (120) d'ordinateur comprenant un bouton principal (121), un bouton secondaire (122) et un élément d'aide au défilement(120b), ainsi que des moyens logiciels de mise en œuvre du procédé selon l'une des revendications précédentes pour établir un lien fonctionnel entre les boutons principal et secondaire de l'outil de pointage et une commande de déploiement et un lien fonctionnel entre l'outil d'aide au défilement et une commande d'orientation.

11. Interface de commande selon la revendication précédente, **caractérisée en ce qu'**elle comprend un transmetteur d'ordre sans fil apte à communiquer avec l'actionneur.

12. Utilisation d'un outil de pointage lié à un ordinateur personnel dans un procédé de commande d'un écran domotique mobile selon la revendication 1.

## Patentansprüche

1. Verfahren zur Steuerung einer beweglichen elektronischen Jalousie mit motorisierten verstellbaren Lamellen mithilfe eines elektromechanischen Aktors in einem Gebäude, wobei die Steuerung von einer einen Steuerschnittstelle aus erfolgt, die einen Bildschirm und ein einem Zeiger auf dem Bildschirm entsprechendes Zeigerwerkzeug umfasst, wobei eine Betätigung des Zeigerwerkzeugs eine Verschiebung des Bildschirmzeigers ermöglicht, wobei das Zeigerwerkzeug mindestens einen Knopf zum Steuern des Entfaltens und ein Bildlaufelement zur Ausrichtung der Lamellen umfasst, wobei das Zeigerwerkzeug an einen Rechner angeschlossen ist, wobei das Verfahren umfasst:
a. einen Schritt (S1) des Aktivierens eines Steuerungsfensters (34);
b. einen Schritt (S2) des Modifizierens der Funktionalitäten des Zeigerwerkzeugs in Verbindung mit dem Steuerungsfenster (34), wobei das Zeigerwerkzeug einen Teil seiner mit dem Betrieb des Rechners als Bürowerkzeug zusammenhängenden Funktionalitäten verliert, um neue Funktionalitäten zur Steuerung der elektronischen Jalousie zu erhalten;
c. einen Schritt des Erfassens einer mechanischen Einwirkung auf einen Hauptknopf, einen Nebenknopf, oder ein Bildlaufelement;
d. einen Schritt des Interpretierens der detektierten mechanischen Einwirkung als Befehl zum Entfalten oder Befehl zum Ausrichten der Lamellen, wobei die mechanische Einwirkung auf einen der Haupt- oder Nebenknöpfe bzw. das Bildlaufelement jeweils einen Befehl zum Entfalten oder einen Befehl zum Ausrichten der Lamellen auslösen.

2. Verfahren nach dem vorstehenden Anspruch, **dadurch gekennzeichnet, dass** der Schritt des Aktivierens des Softwarelements die Aktivierung eines graphischen Bedienelements umfasst.

3. Verfahren nach dem vorstehenden Anspruch, **dadurch gekennzeichnet, dass** die Aktivation des graphischen Bedienelements das Positionieren eines Zeigers des Zeigerelements auf der Höhe des graphischen Bedienelements umfasst.

4. Verfahren nach einem der vorstehenden Ansprüche, **dadurch gekennzeichnet, dass** es einen Schritte des Anzeigens auf einem Bildschirm des Rechners einer mindestens teilweisen graphischen Darstellung einer Fernbedienung mit Drehknopf umfasst.

5. Verfahren nach einem der vorstehenden Ansprüche, **dadurch gekennzeichnet, dass** es einen Schritt des Anzeigens auf einem Bildschirm des Rechners mindestens eines ein zu bedienendes Haushaltselektronikgerät darstellenden Symbols umfasst, das auf einem Plan des Gebäudes positioniert ist.

6. Verfahren nach einem der vorstehenden Ansprüche, **dadurch gekennzeichnet, dass** eine doppelte Aktivierung (Doppelklick) von einem der Knöpfe des Zeigerwerkzeugs das Aussenden eines Befehls zum Entfalten in eine vorgegebene Zwischenstellung zur Folge hat.

7. Verfahren nach einem der vorstehenden Ansprüche, **dadurch gekennzeichnet, dass** es einen vorangehenden Schritt des Pairings zwischen dem Aktor und einer mit dem Rechner verbundenen Befehlsübermittlungsvorrichtung umfasst.

8. Verfahren nach dem vorstehenden Anspruch, **dadurch gekennzeichnet, dass** die Befehlsübermittlungsvorrichtung ein an den Rechner angeschlossener Sender ist.

9. Verfahren nach Anspruch 7, **dadurch gekennzeichnet, dass** die Befehlsübermittlungsvorrichtung eine über das Internet mit dem Rechner verbundene Sendebox ist.

10. Steuerschnittstelle zur Steuerung einer beweglichen Jalousie mithilfe eines elektromechanischen Aktors (10), wobei die Steuerschnittstelle einen Bildschirm (32) und eine graphische Darstellung eines Softwarelements auf dem Bildschirm (34) umfasst, **dadurch gekennzeichnet, dass** die Schnittstelle ein Zeigerwerkzeug (120) des Rechners umfasst, der einen Hauptknopf (121), einen Nebenknopf (122) und ein Bildlaufelement (120b) sowie Softwaremittel zur Ausführung des Verfahrens nach einem der vorstehenden Ansprüche umfasst, um eine funktionelle Verbindung zwischen dem Haupt- und Nebenknopf des Zeigerelements und einem Befehl zum Entfalten und eine funktionelle Verbindung zwischen dem Bildlaufelement und einem Befehl zum Ausrichten herzustellen.

11. Schnittstelle nach dem vorstehenden Anspruch, **dadurch gekennzeichnet, dass** sie einen drahtlosen Befehlssender umfasst, der zum Kommunizieren mit dem Aktor geeignet ist.

12. Verwendung eines mit einem Personal Computer verbundenen Zeigerwerkzeugs in einem Verfahren zur Steuerung einer beweglichen elektronischen Jalousie nach Anspruch 1.

## Claims

1. A method for controlling a motor-driven mobile home automation screen having adjustable slats by means of an electromechanical actuator, in a building, the control being implemented through a control interface comprising a screen and a pointer tool to which a pointer on the screen corresponds, an action on the pointer tool allowing a movement of the pointer on the screen, the pointer tool comprising at least one control button for deployment and a scroll-assisting element for adjusted orientation of the slats, the method comprising:
a. a step (S1) to activate a control window (34);
b. a step (S2) to modify functionalities of the pointer tool in association with the control window (34), the pointer tool then losing part of its functionalities related to the operation of the computer as automation tool to gain new functionalities for controlling the home automation screen;
c. a step to detect a mechanical action on a main button, a secondary button or a scroll-assisting element of the pointer tool; and
d. a step to interpret the detected mechanical action as a deployment command or a slat orientation command, the mechanical action on one of the main or secondary buttons or on the scroll-assisting element respectively causing a deployment command or a slat orientation command.

2. The control method according to the preceding claim, **characterized in that** the activation step of the software element comprises the activation of a graphical control element.

3. The control method according to the preceding claim, **characterized in that** the activation of the graphical control element comprises the positioning of a pointer of the pointing element on the graphical control element.

4. The control method according to one of the preceding claims, **characterized in that** it comprises a display step on a computer screen of a graphical representation at least in part of a remote control with thumbwheel.

5. The control method according to one of the preceding claims, **characterized in that** it comprises a display step on a computer screen of one or more icons representing an item of automated home equipment to be driven, positioned on a plan of the building.

6. The control method according to one of the preceding claims, **characterized in that** a double actuation (double-click) of one of the buttons of the pointer tool causes the transmitting of a deployment command towards a predefined intermediate position.

7. The control method according to one of the preceding claims, **characterized in that** it comprises a prior pairing step between the actuator and a command transmitting device linked to the computer.

8. The control method according to the preceding claim, **characterized in that** the control device giving commands is a transmitter connected to the computer.

9. The control method according to claim 7, **characterized in that** the command-transmitting device is a transmission unit linked via Internet with the computer.

10. A control interface for controlling a motor-driven mobile screen having adjustable slats by means of an electromechanical actuator (10), this control interface comprising a screen (32) and a graphical representation of a software element on this screen (34), **characterized in that** the interface comprises a computer pointer tool (120) comprising a main button (121), a secondary button (122) and a scroll-assisting element (120b), and software means for implementing the method according to one of the preceding claims to set up a functional link between the main and secondary buttons of the pointer tool and a deployment command, and a functional link between the scroll-assisting element and an orientation command.

11. The control interface according to the preceding claim, **characterized in that** it comprises a wireless command transmitter capable of communicating with the actuator.

12. The use of a pointer tool linked to a personal computer in a method for controlling a mobile home automation screen according to claim 1.
